# EUROPEAN PATENT SPECIFICATION

(11) **EP 0 880 987 B1**
(45) Date of publication and mention of the grant of the patent: **29.12.2004**
(21) Application number: 98303798.7
(22) Date of filing: 14.05.1998
(51) Int. Cl.: B01D 35/30

(54) **Filtration unit**
Filtrationseinheit
Unité de filtration

(30) Priority: 14.05.1997 US 855271
(43) Date of publication of application: 02.12.1998
(73) Proprietor: PTI Technologies, Inc., Oxnard, CA 93030 (US)
(72) Inventor: Sandford, Michael S., Oxnard, California 93033 (US)
(74) Representative: Flint, Adam

(56) References cited:
- WO-A-93/14858
- WO-A-96/09875
- US-A- 4 138 234

## Description

The present invention relates to a filtration unit. The invention has particular application to a filtration unit capable of using a wide-variety of filter elements ("multi-media") and, in particular, to a spin-on cartridge with a demountable and replaceable filter element capable of fine and coarse filtration.

Disposable filtration cartridges for filtering fluids, such as engine oil, are well known in the art. Most of these filter cartridges utilise the well-known "spin-on, spin-off" connection construction. With these known constructions, however, the filter cartridge is permanently sealed in its housing and the entire filter including the housing must be discarded and replaced after use. Such a procedure is costly and wasteful and poses an environmental problem due to the difficulty associated with disposing of the spent filter cartridge.

To reduce the costs associated with replacing both the filter element and the support housing, and to minimise the environmental impact associated with that disposal, filters with removable filter elements have been developed. One such filter is disclosed in US-A-4218324. In that patent, a tubular metal support member is used in conjunction with the filter element to facilitate disassembly and replacement of component parts within large industrial filters. But the construction disclosed in US-A-4218324 is directed to large, high-cost industrial filters and fails to address the requirements of the lower-cost "spin-on, spin-off" construction and is therefore entirely silent with respect to how the filter cartridge and associated support are connected to, and supported by, the outer housing to facilitate ease of disassembly.

Other inventors have addressed the issue of how to easily remove a filter cartridge from the filter housing. In the system disclosed in WO-A-96/09875, a spring-assist mechanism is used as part of the locking assembly which secures the filter within the housing but also provides for the disassembly from and the removal of the cartridge from its canister housing. In that application, an annular filter is coupled with a closure plate upon which a spring element exerts an axial pressure in order to secure the filter in place within the canister.

Although the design disclosed in WO-A-96/09875 utilises stiffening support rings attached along the axis of the filter to support the pleated filter element, these rings do not support the filter against the axial force exerted by the spring or the local fluid pressures caused by the inward or outward flow of the liquid being filtered. This lack of such support is critical when delicate filter media are employed because the dangers of buckling, collapsing, or blow-through is much greater with this type of material. Ultimately, and owing to these dangers, the usefulness of the filter apparatus disclosed in WO-A-96/09875 is questionable in many applications, especially those involving the separation of fine particles.

According to the present invention, there is provided a filtration unit, the filtration unit comprising: a housing canister having an open first end with a top plate and a closed second end, said top plate having an opening therethrough and a recess; a mounting head assembly having a head unit and a centre tube, said head unit including an annular base having a first flow passage, a second flow passage and a protrusion corresponding to said housing canister recess; said centre tube having a plurality of perforations for flow passage therethrough, a first end which attaches liquid-tightly to said head unit annular base and is disposed between said first flow passage and said second flow passage, and a closed second end, such that fluid is constrained to flow between said first flow passage and said second flow passage via said centre tube perforations; biasing means disposed between said centre tube and said housing canister; and, a filter element having an annular opening at each end through which said centre tube is inserted; wherein on insertion of said centre tube through said openings of said filter element and through said open end of said housing canister into said housing canister, said head unit annular base protrusion passes through said top plate recess and said biasing means is compressed between said closed end of said centre tube and said closed end of said housing canister to create a biasing force on said centre tube whereby said filter element is removably retained in said housing canister after rotation of said head unit in the housing canister and fluid is constrained to flow between said first flow passage and said second flow passage via said centre tube perforations and said filter element.

Accordingly, in an embodiment, the present invention provides a multi-media filtration system which utilises a standard "spin-on, spin-off" design, and which is capable of separating the finest of particles, including particles at the micron and sub-micron level, yet provides the convenience of a reusable and remountable filter system adaptable to a filter head or block in which all of the components may be reused except for any disposable filter element.

In an embodiment, the present invention provides a spin-on filter assembly that incorporates a reusable centre tube support which serves to position the filter element within the filter housing and to support the filter media against the hydraulic pressures being asserted by the fluid being filtered so as to minimise buckling, collapse, or blow-through and to isolate the filter media from other internal forces.

Related objects and advantages of the present invention will also be apparent from review of the following description and appended claims.

An embodiment of the present invention will now be described by way of example with reference to the accompanying drawings, in which:
Figures 1A and 1B are exploded perspective views of an example of a filter cartridge including the housing canister, a filter, and a mounting head assembly, according to the present invention;
Figure 2 is a top view of the assembled filter cartridge; and,
Figure 3 is a partial cross-sectional view of the assembled filter cartridge from Figure 2.

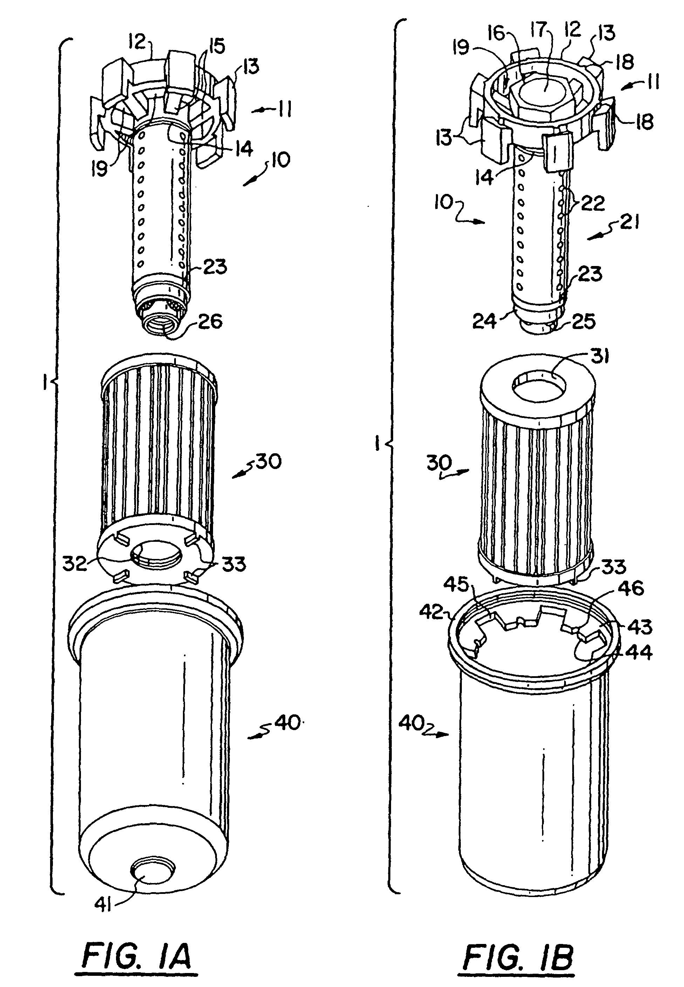

Referring now to the drawings and particularly to Figure 1A, there is illustrated a preferred embodiment of the filter cartridge 1 having a mounting head assembly 10, filter element 30, and housing canister 40. The mounting head assembly 10 has a head unit 11 and an attached centre tube 21 which is open at the end near the head unit 11 and closed at its distal end. The head unit 11 has an annular base 12 with equally spaced angled protrusions 13 projecting radially outwards from the annular base 12.

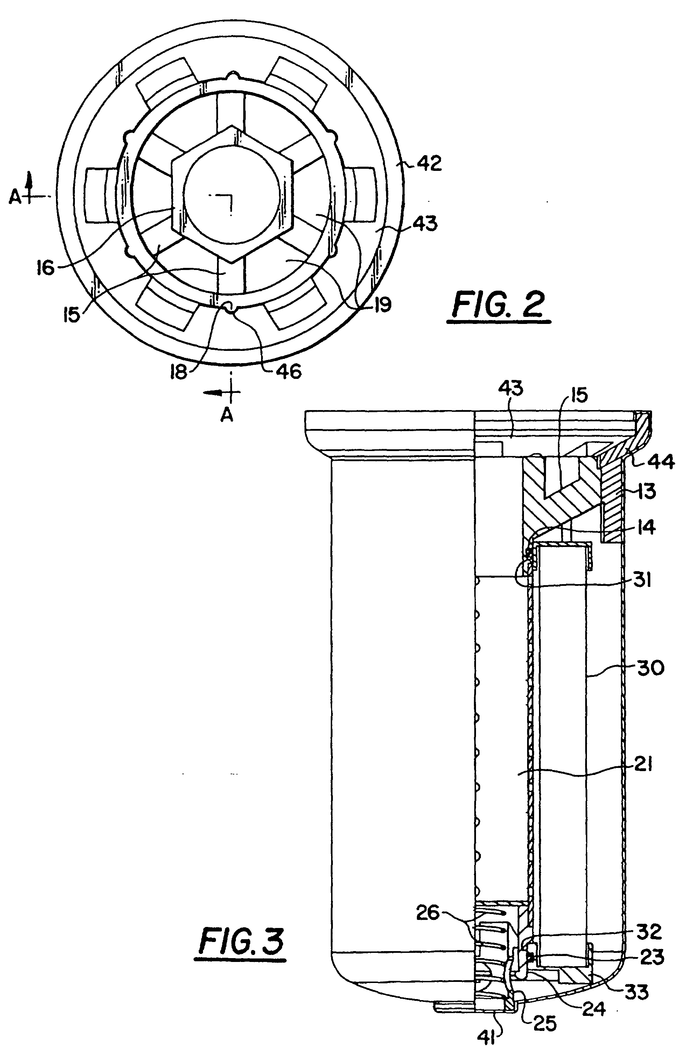

The underside of the head unit 11 defines an attaching plate 15 which is designed in a spoke-like manner to define fluid flow apertures 19 to facilitate or permit fluid flow therethrough. The apertures 19 defined in the attaching plate 15 are best illustrated in Figure 2.

The head unit 11 also includes an hexagonal cap 16 (or other similar design such as would fit a conventional socket) to permit easy grip of the head unit 11 so as to provide for ease of assembly and disassembly. This construction also minimises accidental contact with the fluids being filtered when the filter is being disassembled. An opening 17 is provided at the centre of the hexagonal cap 16 to permit fluid flow through the cap 16 into the centre tube 21. In the typical spin-on bayonet construction, the opening 17 is threaded to permit ready connection to a filter head, engine block, or other source of fluid to be filtered.

The centre tube 21 includes a series of perforations defining flow passages 22 which will vary in size and position depending on each specific filtration application but which are illustrated in Figures 1A and 1B as being placed in-line, axially along the tube 21. The top of tube 21 is fixedly attached to the bottom of the head unit 11 to create a leak-proof seal. An O-ring 14 is inserted between the bottom end of the head unit 11 and the top of the centre tube 21 to create an effective leak-proof seal with the inner surface 31 of the upper open end of the filter element 30 when the filter cartridge 1 is assembled. The bottom end of the centre tube 21 is also equipped with an O-ring 23 which serves to create a seal between the inner surface of the lower open end of the filter element 30 and the centre tube 21. The O-rings 14,23 may be disposed within the end caps 31,32 of the filter element 30 itself or the O-rings 14,23 may be applied directly to the centre tube 21.

In the preferred embodiment, the centre tube 21 tapers in a step-like fashion to form a concentric step 24 at its distal end remote from the head unit 11. A concentric tube 25 is held captive within the centre tube 21 to project just below the concentric step 24. A compression spring 26 is positioned between the closed end of the centre tube 21 and an internal lip in the concentric tube 25 to bias the concentric tube 25 away from the head unit 11. It is important to note that the concentric tube 25 is designed to retract into the centre tube 21 as the centre tube 21 is inserted into the housing canister 40 whereby the coil spring 26 is compressed between the base plate 41 of the housing canister 40 (via the internal lip of the concentric tube 25) and the closed bottom end of the centre tube 21. The base plate 41 of the housing canister 40 has a recess to locate the concentric tube 25. The spring 26 may be any suitable compression spring or other suitable spring design (bellows, sheet metal, etc.). The bottom O-ring 23 is located just above the concentric step 24 on the centre tube 21 (whether that O-ring is affixed to the filter element end cap 32 or the centre tube 21).

The concentric tube 25 may also include flow passages (not shown) to provide flow to an optional bypass valve (not shown) which is commonly employed in such filter assemblies. This bypass valve would allow fluid flow to bypass the filter element 30 whenever a pre-set pressure differential has been reached. If installed, it would be preferred to place the bypass valve within the mounting head assembly 10. It is also possible to equip the present invention with an anti-drain valve (not shown) in current widespread use. The centre tube 21 may also incorporate permanent magnets (not shown) to assist the filter element 30 in capturing metal particles.

As mentioned above, the filter element 30 is provided with an annular opening at the bottom end cap 32 and at the top end cap 31 through which the liquid being filtered can flow. In use, the filter element 30 slips over the centre tube 21 which acts as a support core to the filter element 30. The base of the filter element 30 may have fingers 33 which create a flow path for bypass fluid flow and assist in holding the filter element 30 in place inside the housing canister 40. As a direct result of this construction, the filter element 30 is correctly positioned and retained within the housing canister 40, but the filter element 30 has no axially directed pressure exerted on it.

Although the top interior rim 42 of the housing canister 40 can be threaded for attachment to a filter head or block (not shown), the more common attachment mechanism is to thread the opening 17 for a spin-on, spin-off connection to the filter head or engine block. An annular top plate 43 of the housing canister 40 is made up of flanges 44 which project radially inwards to define cut-outs 45 therebetween which are equally spaced apart around the periphery of the top plate 43. The top plate 43, which can utilise a ribbed construction for greater strength, is sealed onto the interior of the housing canister 40 via a gasket retainer (not shown) to which the top plate 43 is fixed by low cost canning technologies, but which may also utilise welding as an option to provide additional strength.

The flanges 44 and cut-outs 45 formed on the top plate 43 correspond in spacing, size and geometry with the protrusions 13 formed on the head unit 11. The protrusions 13 act as guides to centre the head unit 11 within the housing canister 40 so as to minimise any inadvertent skewing or cocking during assembly and disassembly. The protrusions 13 on the head unit 11 are constructed and spaced to latch underneath the flanges 44. Each of the flanges 44 has an indent 46 which aligns with a respective one of equally spaced lugs 18 formed circumferentially on the annular base 12 formed at the base of each protrusion 13 to promote a secure fit of the mounting head assembly 10 and filter element 30 when the protrusions 13 are properly latched underneath the flanges 44. The lugs 18 and indents 46 also provide a visual indication of correct assembly and may be colour coded to enhance this visual indication.

Referring to Figure 2, there is illustrated the top view of the assembled filter cartridge 1. The outermost annular ring is the top rim 42 of the housing canister 40. The top rim 42 can be provided with an O-ring or so-called "base gasket" (not shown) to create a liquid-tight seal between the housing canister 40 and the engine block (not shown) or any other filter head which serves as a fluid source. The top plate 43 and attached mounting head assembly 11 can also be seen in Figure 2. This view also illustrates well the indents 46 and lugs 18 in an aligned and engaged position and the spokes of the attaching plate 15.

Referring now to Figure 3, the centre tube 21 is biased away from the base plate 41 of the housing canister 40 by the spring 26 secured between the concentric tube 25 and the centre tube 21. The spring force applied by the spring 26 to the centre tube 21 is transferred directly through the protrusions 13 and to the flanges 44. It is important to note that through this construction, the filter element 30 is isolated from the load of the spring 26. Moreover, it should also be clear that through this construction, once the filter assembly is disassembled, the filter element 30 may be easily replaced or cleaned to be reused (depending on the chosen filter media).

It is the permanently sealed top plate 43 of the housing canister 40 that allows the mounting head assembly 10 to connect to the top plate 43 by lining up the attaching plate protrusions 13 with matching top plate cut-outs 45, inserting the mounting head assembly 10 and filter element 30, compressing the internal spring 26, and rotating the inserted assembly within the housing canister 40 until the attaching plate protrusions 13 align with the top plate flanges 44. Once the attaching plate 15 is properly indexed and the indents 46 are properly positioned over the protrusions 13, the spring 26 urges the mounting head assembly 10 to rise and thereby causes the lugs 18 to enter the indents 46 to disengageably lock the attaching plate 15 and mounting head assembly 10 into place.

When assembled, liquid or other fluid, such as air, to be filtered enters the filter assembly through the apertures 19 defined by the spokes formed in the attaching plate 15, passes through the filter element 30, flows radially inwardly through the centre tube's perforations 22, and up through the centre tube 21, so as to flow out through the opening 17 in the hexagonal cap 16. It is important to note that by positioning the centre tube 21 inwardly of the filter element 30, the material comprising the filter is reinforced and supported against the normal forces being applied by the pressurised fluid flow. This support minimises the effects associated with pressurised fluid flow such as buckling, collapse or "blow-through" and broadens the range of materials which can be used for the filter media so as to permit the use of the delicate media used in many micro-filtration applications.

It is also possible to vary this design by using a perforated external cylinder or tube (not shown) which may be positioned outside the filter element 30 so as to cover and surround the filter element 30 and permit the reverse fluid flow in which fluid enters the filter assembly through the opening 17 and exits the filter assembly through the apertures 19. In this alternate design, the filter element is still isolated from the axial load and the differential pressures across the filter element are accounted for by the existence of an external support.

Removal of the reusable mounting head assembly 10 from the housing canister 40 is conducted by the reverse of the assembly process. First, the mounting head assembly 10 is pushed in against the internal spring 26 such that the lugs 18 clear the indents 46. The attaching plate 15 is then turned until the protrusions 13 line up with the base plate cut outs 45, and finally the mounting head assembly 10 and the filter element 30 are removed from the canister 40. Once the mounting head assembly 10 is separated from the canister 40, the filter element 30 may be removed or cleaned for reuse prior to re-assembly. The ability to remove and reuse all of the components aside from a disposable filter element provides substantial savings from manufacturing costs and reduces potentially adverse environmental repercussions associated with disposable filter assemblies.

The filter system disclosed may be manufactured using metals, including corrosion resistant metals, plastics and other sturdy materials. The filter element 30 may be fabricated from a variety of materials, including delicate membranes for the separation of fine particles such as micron and submicron sized particles.

It should be understood that the present invention is not limited to the preferred embodiment discussed above, which is for illustrative purposes only.

## Claims

1. A filtration unit (1), the filtration unit (1) comprising:
a housing canister (40) having an open first end with a top plate (43) and a closed second end, said top plate (43) having an opening therethrough and a recess (45);
a mounting head assembly (10) having a head unit (11) and a centre tube (21), said head unit (11) including an annular base (12) having a first flow passage (17), a second flow passage (19) and a protrusion (13) corresponding to said housing canister recess (45) ;
said centre tube (21) having a plurality of perforations (22) for flow passage therethrough, a first end which attaches liquid-tightly to said head unit annular base (12) and is disposed between said first flow passage (17) and said second flow passage (19), and a closed second end, such that fluid is constrained to flow between said first flow passage (17) and said second flow passage (19) via said centre tube perforations (22);
biasing means (26) disposed between the closed end of said centre tube (21) and the closed end of said housing canister (40); and,
a filter element (30) having an annular opening at each end through which said centre tube (21) is inserted;
wherein on insertion of said centre tube (21) through said openings of said filter element (30) and through said open end of said housing canister (40) into said housing canister (40), said head unit annular base protrusion (13) passes through said top plate recess (45) and said biasing means (26) is compressed between said closed end of said centre tube (21) and said closed end of said housing canister (40) to create a biasing force on said centre tube (21) whereby said filter element (30) is removably retained in said housing canister (40) after rotation of said head unit (11) in the housing canister (40) and fluid is constrained to flow between said first flow passage (17) and said second flow passage (19) via said centre tube perforations (22) and said filter element (30).

2. A filtration unit according to claim 1, wherein said filtration unit comprises means for creating a seal between said centre tube (21) and said filter element (30).

3. A filtration unit according to claim 1 or claim 2, wherein said head unit (11) comprises an attaching plate (15) attached to or formed with said annular base (12), and wherein said head unit (11) comprises a lug (18) formed on said annular base protrusion (13) adapted to fit into an indent (46) formed in said top plate (43) once said attaching plate (15) is properly indexed whereby said annular base (12) is removably retained within said cylindrical housing canister (40).

4. A filtration unit according to any of claims 1 to 3, wherein the bottom end of said filter element (30) includes at least one finger (33) adapted to cooperate with said housing canister second end to limit rotation between said filter element (30) and said housing canister (40).

5. A filtration unit according to any of claims 1 to 4, wherein said head unit (11) includes a socket assembly (16) which is adapted to fit a tool to facilitate disengagement of said head unit (11) from said housing canister top plate (43).

6. A filtration unit according to any of claims 1 to 5, wherein said housing canister (40) has an internally recessed base plate (41) at said second end, the centre tube (21) locating in the recess of the recessed base plate (41).

7. A filtration unit according to any of claims 1 to 6, wherein said biasing means (26) is a spring (26).

8. A filtration unit according to claim 7, wherein said spring (26) is a coil spring (26) which is held captive within said centre tube (21).

9. A filtration unit according to any of claims 1 to 8, wherein said annular base (12) is provided with a threaded fitting whereby it can be attached to a fluid supply and whereby unfiltered fluid can flow into the housing canister (40) and filtered fluid can flow out of the housing canister (40).

## Patentansprüche

1. Filtrationseinheit (1), die Folgendes aufweist:
ein Gehäuse (40), das ein offenes erstes Ende mit einer oberen Platte (43) und ein geschlossenes zweites Ende hat, wobei die obere Platte (43) eine durchgehende Öffnung und eine Ausnehmung (45) hat;
eine Montagekopfbaugruppe (10) mit einer Kopfeinheit (11) und einer rnittigen Röhre (21), wobei die Kopfeinheit (11) eine ringförmige Basis (12) beinhaltet, die eine erste Durchflusspassage (17), eine zweite Durchflusspassage (19) und einen Vorsprung (13), welcher der Ausnehmung (45) in dem Gehäuse entspricht, aufweist;
wobei die mittige Röhre (21) Folgendes aufweist: eine Mehrzahl von Durchbrüchen (22) für den Durchgang einer Strömung durch diese, ein erstes Ende, das flüssigkeitsdicht mit der ringförmigen Basis (12) der Kopfeinheit abschließt und zwischen der ersten Durchflusspassage (17) und der zweiten Durchflusspassage (19) angeordnet ist; und ein geschlossenes zweites Ende, so dass Fluid gezwungen ist, zwischen der ersten Durchflusspassage (17) und der zweiten Durchflusspassage (19) über die Durchbrüche (22) in der mittigen Röhre zu fließen;
ein Vorspannungsmittel (26), das zwischen dem geschlossenen Ende der mittigen Röhre (21) und dem geschlossenen Ende des Gehäuses (40) angeordnet ist; und
ein Filterelement (30) mit einer ringförmigen Öffnung an jedem Ende, durch welche die mittige Röhre (21) eingeführt ist;
wobei sich - beim Einführen der mittigen Röhre (21) durch die Öffnungen des Filterelements (30) und durch das offene Ende des Gehäuses (40) in das Gehäuse (40) hinein - der Vorsprung (13) der ringförmigen Basis der Kopfeinheit durch die Ausnehmung (45) der oberen Platte schiebt und wobei das Vorspannungsmittel (26) zwischen dem geschlossenen Ende der mittigen Röhre (21) und dem geschlossenen Ende des Gehäuses (40) so zusammengedrückt wird, dass an der mittigen Röhre (21) eine Vorspannungskraft entsteht, wodurch das Filterelement (30) herausnehmbar in dem Gehäuse (40) gehalten wird, nachdem die Kopfeinheit (11) in dem Gehäuse (40) gedreht wurde, und wodurch Fluid gezwungen ist, zwischen der ersten Durchflusspassage (17) und der zweiten Durchflusspassage (19) über die Durchbrüche (22) in der mittigen Röhre und das Filterelement (30) zu fließen.

2. Filtrationseinheit nach Anspruch 1, wobei die Filtrationseinheit Mittel zum Herstellen einer Dichtung zwischen der mittigen Röhre (21) und dem Filterelement (30) aufweist.

3. Filtrationseinheit nach Anspruch 1 oder 2, wobei die Kopfeinheit (11) eine Befestigungsplatte (15) aufweist, die an der ringförmigen Basis (12) angebracht oder daran ausgebildet ist, und wobei die Kopfeinheit (11) eine Nase (18) aufweist, die an dem Vorsprung (13) der ringförmigen Basis ausgebildet ist und so ausgebildet ist, dass sie in eine Einrückung (46) hineinpasst, die in der oberen Platte (43) ausgebildet ist, sobald die Befestigungsplatte (15) richtig indexiert ist, wodurch die ringförmige Basis (12) herausnehmbar in dem zylindrischen Gehäuse (40) gehalten wird.

4. Filtrationseinheit nach einem der Ansprüche 1 bis 3, wobei das untere Ende des Filterelements (30) wenigstens einen Finger (33) enthält, der so konfiguriert ist, dass er mit dem zweiten Ende des Gehäuses dergestalt zusammenwirkt, dass die Drehung zwischen dem Filterelement (30) und dem Gehäuse (40) begrenzt wird.

5. Filtrationseinheit nach einem der Ansprüche 1 bis 4, wobei die Kopfeinheit (11) eine Angriffsanordnung (16) enthält, die so konfiguriert ist, dass sie ein Werkzeug in Eingriff nehmen kann, um das Ablösen der Kopfeinheit (11) von der oberen Platte (43) des Gehäuses zu erleichtern.

6. Filtrationseinheit nach einem der Ansprüche 1 bis 5, wobei das Gehäuse (40) an dem zweiten Ende eine mit einer innenliegenden Ausnehmung versehene Basisplatte (41) aufweist, wobei die mittige Röhre (21) in der Ausnehmung der mit der Ausnehmung versehenen Basisplatte (41) sitzt.

7. Filtrationseinheit nach einem der Ansprüche 1 bis 6, wobei das Vorspannungsmittel (26) eine Feder (26) ist.

8. Filtrationseinheit nach Anspruch 7, wobei die Feder (26) eine Spiralfeder (26) ist, die in der mittigen Röhre (21) festgehalten wird.

9. Filtrationseinheit nach einem der Ansprüche 1 bis 8, wobei die ringförmige Basis (12) mit einem Gewindeanschlussstück versehen ist, durch das sie an eine Fluidzufuhr angeschlossen werden kann und wodurch ungefiltertes Fluid in das Gehäuse (40) fließen kann und gefiltertes Fluid aus dem Gehäuse (40) heraus fließen kann.

## Revendications

1. Unité de filtration (1), l'unité de filtration (1) comprenant :
un réservoir de logement (40) ayant une première extrémité ouverte avec une plaque supérieure (43) et une seconde extrémité fermée, ladite plaque supérieure (43) ayant une ouverture à travers celle-ci et un renfoncement (45) ;
un ensemble faisant tête de montage (10) ayant une unité de tête (11) et un tube central (21), ladite unité de tête (11) comprenant une base annulaire (12) ayant un premier passage d'écoulement (17), un second passage d'écoulement (19) et une saillie (13) correspondant audit renfoncement de réservoir de logement (45) ;
ledit tube central (21) ayant une pluralité de perforations (22) pour le passage d'écoulement à travers celles-ci, une première extrémité qui s'attache de manière étanche aux liquides à ladite base annulaire de l'unité de tête (12) et est placée entre ledit premier passage d'écoulement (17) et ledit second passage d'écoulement (19), et une seconde extrémité fermée, de sorte que le fluide est contraint de s'écouler entre ledit premier passage d'écoulement (17) et ledit second passage d'écoulement (19) via lesdites perforations du tube central (22) ;
un moyen de déviation (26) disposé entre l'extrémité fermée dudit tube central (21) et l'extrémité fermée dudit réservoir de logement (40) ; et
un élément de filtre (30) ayant une ouverture annulaire au niveau de chaque extrémité à travers lesquelles le tube central (21) est inséré ;
dans lequel lors de l'insertion dudit tube central (21) par lesdites ouvertures dudit élément de filtre (30) et à travers ladite extrémité ouverte dudit réservoir de logement (40) dans ledit réservoir de logement (40), ladite saillie de la base annulaire de l'unité de tête (13) passe à travers ledit renfoncement de la plaque supérieure (45) et ledit moyen de déviation (26) est comprimé entre ladite extrémité fermée dudit tube central (21) et ladite extrémité fermée dudit réservoir de logement (40) pour créer une force de déviation sur le tube central (21), moyennant quoi l'élément de filtre (30) est retenu de manière amovible dans ledit réservoir de logement (40) après rotation de ladite unité de tête (11) dans le réservoir de logement (40) et le fluide est contraint de s'écouler entre ledit premier passage d'écoulement (17) et ledit second passage d'écoulement (19) via lesdites perforations du tube central (22) et ledit élément de filtre (30).

2. Unité de filtration selon la revendication 1, dans laquelle ladite unité de filtration comprend un moyen de création d'un joint entre ledit tube central (21) et ledit élément de filtre (30).

3. Unité de filtration selon la revendication 1 ou la revendication 2, dans laquelle ladite unité de tête (11) comprend une plaque d'attachement (15) attachée à ladite base annulaire (12) ou formée avec celle-ci, et dans laquelle ladite unité de tête (11) comprend une barrette (18) formée sur ladite saillie de la base annulaire (13) adaptée pour entrer dans un perçage (46) formé dans ladite plaque supérieure (43) une fois que ladite plaque d'attachement (15) est indexée de manière appropriée, moyennant quoi ladite base annulaire (12) est retenue de manière amovible dans ledit réservoir de logement (40) cylindrique.

4. Unité de filtration selon l'une quelconque des revendications 1 à 3, dans laquelle l'extrémité de fond dudit élément de filtre (30) comprend au moins un doigt (33) adapté pour coopérer avec ladite seconde extrémité de réservoir de logement pour limiter la rotation entre ledit élément de filtre (30) et ledit réservoir de logement (40).

5. Unité de filtration selon l'une quelconque des revendications 1 à 4, dans laquelle ladite unité de tête (11) comprend un ensemble faisant douille (16) qui est adapté pour être en correspondance avec un outil pour faciliter le désengagement de ladite unité de tête (11) de ladite plaque supérieure du réservoir de logement (43).

6. Unité de filtration selon l'une quelconque des revendications 1 à 5, dans laquelle ledit réservoir de logement (40) a une plaque de base renfoncée à l'intérieur (41) au niveau de la seconde extrémité, le tube central (21) se situant dans le renfoncement de la plaque de base renfoncée (41).

7. Unité de filtration selon l'une quelconque des revendications 1 à 6, dans laquelle ledit moyen de déviation (26) est un ressort (26).

8. Unité de filtration selon la revendication 7, dans laquelle ledit ressort (26) est un ressort hélicoïdal (26) qui est maintenu captif dans ledit tube central (21).

9. Unité de filtration selon l'une quelconque des revendications 1 à 8, dans laquelle ladite base annulaire (12) est munie d'un raccord fileté, moyennant quoi elle peut être attachée à une source de fluide et moyennant quoi le fluide qui n'est pas filtré peut s'écouler dans le réservoir de logement (40) et le fluide filtré peut s'écouler hors du réservoir de logement (40).
